(19) Europäisches Patentamt
European Patent Office
Office européen des brevets

(11) **EP 3 275 787 B1**

(12) **EUROPEAN PATENT SPECIFICATION**

(45) Date of publication and mention
of the grant of the patent:
**12.06.2019 Bulletin 2019/24**

(51) Int Cl.:
***B64D 13/06*** *(2006.01)*

(21) Application number: **17183104.3**

(22) Date of filing: **25.07.2017**

(54) **VAPOR CYCLE REFRIGERATION SYSTEM FILTER LIFE ESTIMATION**

LEBENSDAUERABSCHÄTZUNG EINES FILTERS EINES DAMPFZYKLUSKÜHLSYSTEMS

ESTIMATION DE LA DURÉE DE VIE DU FILTRE D'UN SYSTÈME DE RÉFRIGÉRATION À CYCLE DE VAPEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2016 US 201615222445**

(43) Date of publication of application:
**31.01.2018 Bulletin 2018/05**

(73) Proprietor: **Hamilton Sundstrand Corporation Charlotte, NC 28217 (US)**

(72) Inventors:
• **HO, Tony**
**Glastonbury, CT 06033 (US)**
• **PARK, Young K.**
**Simsbury, CT 06070 (US)**

(74) Representative: **Dehns**
**St. Brides House**
**10 Salisbury Square**
**London EC4Y 8JD (GB)**

(56) References cited:
**US-A1- 2005 114 023    US-A1- 2016 101 665**

**Description**

BACKGROUND

The present disclosure relates generally to vapor cycle refrigeration systems, and in particular to determining a remaining useful life of a filter of a vapor cycle refrigeration system using reduced order modeling techniques.

Complex systems, such as those implemented onboard aircraft, often include operational parameters that may not be sensed by physical sensors of the system. For example, aircraft air-conditioning packs implementing vapor cycle refrigeration techniques may not have sensor readings to measure parameters such as a differential pressure across system filters. Knowledge of these unmeasured parameters can be useful for protective control modes, system health diagnostics, and planned maintenance activities. It may be possible to sense these parameters with physical sensors, but at added cost, complexity, and weight to the system.

An exemplary system is shown in US 2016/0101665 A1 disclosing an air treatment monitoring system of an aircraft which communicates through one or more sensor with portions of an environmental control system (ECS), the system monitors an air filter and predicts the remaining operative life of the filter based on the analysis of historical data and the determination of a trend.

SUMMARY

In one example, a method includes operating a vapor cycle refrigeration system of an aircraft. The method further includes measuring, via a plurality of sensors, operational parameters of the vapor cycle refrigeration system while the vapor cycle refrigeration system is operating, and transmitting the measured operational parameters to a computer system. The method further includes generating, by the computer system using a first reduced order model that corresponds to an unclogged state of a filter of the aircraft vapor cycle refrigeration system, a first predicted discharge pressure of a compressor of the aircraft vapor cycle refrigeration system based on the measured operational parameters. The method further includes generating, by the computer system using a second reduced order model that corresponds to a clogged state of the filter, a second predicted discharge pressure of the compressor based on the measured operational parameters. The method further includes determining, by the computer system, a remaining useful life of the filter based on the first predicted discharge pressure, the second predicted discharge pressure, and a measured discharge pressure of the compressor, and outputting, by the computer system, an indication of the remaining useful life of the filter.

In another example, a system includes a vapor cycle refrigeration system of an aircraft and a computer system. The vapor cycle refrigeration system includes a plurality of sensors, a compressor, and a filter. The plurality of sensors are configured to measure operational parameters of the vapor cycle refrigeration system. The compressor is configured to compress refrigerant of the vapor cycle refrigeration system. The filter is disposed within a flow path of the refrigerant. The computer system includes at least one processor and computer-readable memory. The computer-readable memory is encoded with instructions that, when executed by the at least one processor, cause the computer system to receive the operational parameters of the vapor cycle refrigeration system measured by the plurality of sensors, and generate, using a first reduced order model that corresponds to an unclogged state of the filter, a first predicted discharge pressure of the compressor based on the received operational parameters. The computer-readable memory is further encoded with instructions that, when executed by the at least one processor, cause the computer system to generate, using a second reduced order model that corresponds to a clogged state of the filter, a second predicted discharge pressure of the compressor based on the received operational parameters. The computer-readable memory is further encoded with instructions that, when executed by the at least one processor, cause the computer system to determine a remaining useful life of the filter based on the first predicted discharge pressure, the second predicted discharge pressure, and a measured discharge pressure of the compressor. The computer-readable memory is further encoded with instructions that, when executed by the at least one processor, cause the computer system to output an indication of the remaining useful life of the filter.

BRIEF DESCRIPTION OF THE DRAWINGS

FIG. 1 is a schematic block diagram illustrating an example system including an aircraft vapor cycle refrigeration system and a computer system that determines a remaining useful life of a filter of the vapor cycle refrigeration system using reduced order models.

FIG. 2 is a flow diagram illustrating example operations to generate a reduced order model that can be utilized to determine a remaining useful life of a filter of a vapor cycle refrigeration system.

FIG. 3 is a flow diagram illustrating example operations to determine a remaining useful life of a filter of a vapor cycle refrigeration system using reduced order models.

DETAILED DESCRIPTION

As described herein, a computer system utilizes reduced order modeling techniques to determine a remaining useful life of a filter of an aircraft vapor cycle refrigeration system. The filter, disposed within a flow path of refrigerant of the system, gathers debris and particles that may be generated during normal system operation. Accordingly, the filter helps to prevent circulation of the debris that could eventually cause evaporator fouling, throttling valve clogging, or compressor damage. However, as the filter collects debris, its impedance of the flow of refrigerant increases. This increased impedance in turn causes a system compressor to increase the refrigerant pressure to overcome the filter impedance. A compressor discharge pressure that exceeds a maximum protective threshold pressure can cause the compressor to shutdown (i.e., halt operation) to prevent damage to the compressor or other system components. As such, replacement (or cleaning) of the filter prior to system shutdown is desirable to prevent inoperability of the cooling system and the corresponding loss of service and revenue from, e.g., commercial flights.

According to techniques of this disclosure, a computer system utilizes reduced order models to generate predicted discharge pressures of a compressor, the predicted discharge pressures corresponding to both clogged and unclogged states of the filter. The computer system determines a remaining useful life (RUL) of the filter based on the predicted discharge pressures and a measured discharge pressure of the compressor. The computer system outputs an indication of the RUL of the filter including, e.g., a percentage of filtering capacity remaining prior to reaching a clogged filter state that can result in compressor shutdown, an indication of a remaining system runtime prior to reaching the clogged filter state, or other indications of RUL of the filter. As such, the system can determine a RUL of the filter without requiring dedicated pressure or other sensors, such as a differential pressure sensor (or multiple pressure sensors) for measuring a difference in pressure of the refrigerant across the filter. The use of predicted pressures generated by the reduced order models enables the computer system to account for relatively high refrigerant pressures that may be due to normal system operation, rather than clogging of the filter. Moreover, the reduced order of the models (as compared to a higher-fidelity model) lowers the computational complexity of the models, thereby decreasing runtime of the models, requirements of the computer, and complexity of model implementation.

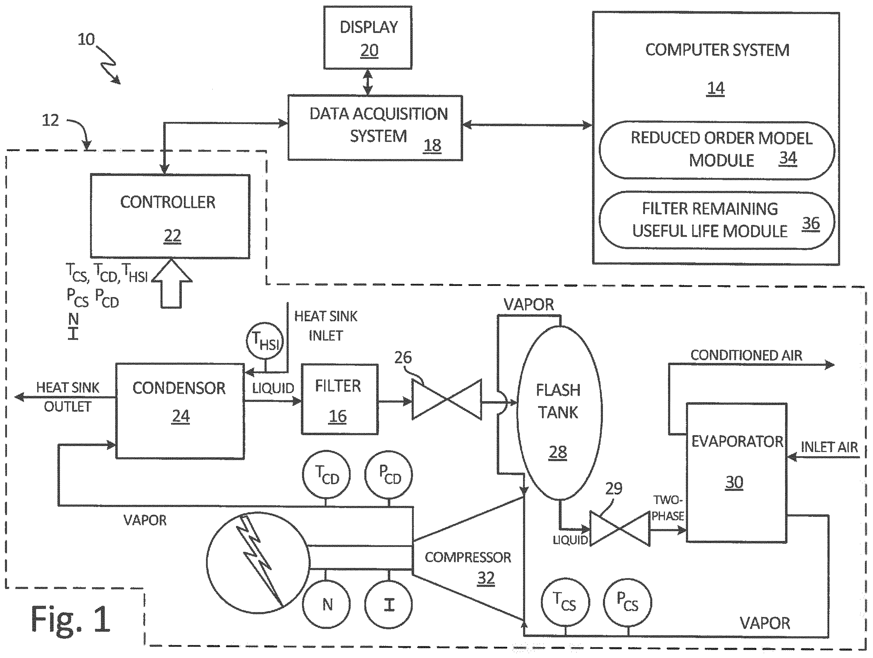

FIG. 1 is a schematic block diagram illustrating system 10 that includes aircraft vapor cycle refrigeration system 12 and computer system 14 that determines a remaining useful life (RUL) of filter 16 using reduced order models. As illustrated in FIG. 1, system 10 further includes data acquisition system 18 and display 20. Vapor cycle refrigeration system 12 includes controller 22, condenser 24, expansion orifice 26, flash tank 28, throttling valve 29, evaporator 30, compressor 32, heat sink inlet temperature sensor $T_{HSI}$, compressor suction temperature sensor $T_{CS}$, compressor suction pressure sensor $P_{CS}$, compressor discharge temperature sensor $T_{CD}$, compressor discharge pressure sensor $P_{CD}$, compressor speed sensor N, and compressor motor current sensor I. Computer system 14 includes reduced order model (ROM) module 34 and filter RUL module 36. The arrowed lines extending between condenser 24, filter 16, expansion orifice 26, flash tank 28, throttling valve 29, evaporator 30, and compressor 32 indicate a flow and direction of refrigerant circulated in vapor cycle refrigeration system 12.

Refrigerant is supplied to compressor 32 in vapor form from both flash tank 28 and evaporator 30. Compressor 32 compresses the refrigerant to a higher pressure and supplies the compressed refrigerant in vapor form to condenser 24. Condenser 24 condenses the compressed vapor refrigerant to liquid form using cooling liquid and/or gaseous flow supplied through the heat sink inlet. Heat from the compressed refrigerant is transferred from the refrigerant to the cooling liquid and/or gaseous flow supplied to condenser 24 through the heat sink inlet and is carried away from vapor cycle refrigeration system 12 via the heat sink outlet. The condensed, liquid refrigerant is supplied from condenser 24 through filter 16 to expansion orifice 26. Filter 16 is disposed within a flow path of the refrigerant and includes filter media, such as fibrous filter media sized to trap particles and other debris that may be present within the liquid refrigerant while allowing the liquid refrigerant to pass through the media. While in the example of FIG. 1, filter 16 is disposed downstream of condenser 24 and upstream of expansion orifice 26, filter 16 can be disposed in any location of vapor cycle refrigeration system 12 in which refrigerant is conveyed in liquid form, such as downstream of flash tank 28 and upstream of throttling valve 29.

Condensed liquid refrigerant passed through filter 16 is supplied through expansion orifice 26. As the liquid refrigerant passes through expansion orifice 26, a rapid pressure reduction of the liquid refrigerant occurs causing an evaporation of a portion of the refrigerant and resulting in two-phase refrigerant (i.e., liquid phase and vapor phase) that is supplied to flash tank 28 where phase separation occurs through, e.g., gravity separation. Expansion orifice 26 can be a fixed orifice configured to cause the pressure reduction in the refrigerant. In some examples, expansion orifice 26 can be implemented as a valve, the position of which is controlled via, e.g., controller 22 to cause and/or control the pressure reduction of the refrigerant.

Vapor-form refrigerant is supplied from flash tank 28 to compressor 32. Liquid refrigerant, cooled by both the heat transfer in condenser 24 and the rapid pressure reduction through expansion orifice 26, is supplied to throttling valve 29. A position of throttling valve 29, sometimes referred to as an expansion valve, is controlled by a motor (not illustrated) via commands from controller 22 to cause a rapid pressure reduction of the liquid refrigerant as it passes through throttling valve 29, thereby causing an evaporation of a portion of the refrigerant (having a further cooling effect on the refrigerant) and resulting in a two-phase refrigerant (i.e., liquid phase and vapor phase) that is supplied to evaporator 30.

Evaporator 30 cools inlet air as it is passed through evaporator 30 through an evaporation process in which the liquid refrigerant is converted (i.e., evaporated) from the liquid state to a mostly or entirely gaseous state. The evaporation process absorbs heat from the inlet air, thereby cooling the inlet air and providing conditioned air for, e.g., a cabin, galley, or other air conditioning system. The evaporated refrigerant is supplied from evaporator 30 to compressor 32. As such, vapor cycle refrigeration system 12 provides a closed-loop cycle of refrigerant in which heat is transferred from an inlet air supply to the refrigerant to provide cooled, conditioned air, and rejected from vapor cycle refrigeration system 12 via the heat sink inlet and the heat sink outlet at condenser 24.

As liquid refrigerant passes through filter 16, particles or other debris that may be present in the refrigerant (e.g., created during normal operation of system components) are collected within the filtration media of filter 16. As filter 16 begins to clog with particles, the impedance of filter 16 to flow of the refrigerant increases. In response, compressor 32 increases the discharge pressure to maintain operational pressures of the refrigerant downstream of filter 16. Compressor 32 and/or controller 22, however, maintain the discharge pressure of compressor 32 to a pressure that is below a maximum threshold pressure to prevent physical damage to compressor 32 and/or other components of vapor cycle refrigeration system 12 that could occur at refrigerant pressures above the maximum threshold pressure.

As illustrated in FIG. 1, vapor cycle refrigeration system includes controller 22. Controller 22 can be any electronic device that is operationally coupled (e.g., electrically and/or communicatively coupled) to components of vapor cycle refrigeration system 12 to control real-time operation of the components of the system and to receive inputs from various sensors positioned throughout vapor cycle refrigeration system 12. As illustrated in FIG. 1, controller 22 is operationally connected to receive inputs from compressor suction temperature sensor $T_{CS}$, compressor discharge temperature sensor $T_{CD}$, heat sink inlet temperature sensor $T_{HSI}$, compressor suction pressure sensor $P_{CS}$, compressor discharge pressure sensor $P_{CD}$, compressor speed sensor N, and compressor motor current sensor I.

Compressor suction temperature sensor $T_{CS}$ and compressor suction pressure sensor $P_{CS}$ are positioned at or near an upstream inlet of compressor 32 to measure a temperature and pressure of refrigerant entering the upstream (or suction) inlet of compressor 32. Compressor discharge temperature sensor $T_{CD}$ and compressor discharge pressure sensor $P_{CD}$ are positioned at or near a downstream outlet of compressor 32 to measure a temperature and pressure of refrigerant exiting the downstream (or discharge) outlet of compressor 32. Compressor speed sensor N and compressor current sensor I are integral to or positioned adjacent to compressor 32. Compressor speed sensor N is configured to sense an operational speed of compressor 32, such as a rotational speed of a shaft of compressor 32. Compressor current sensor I is configured to sense an amount of electrical current draw of compressor 32 from a power source integral to or remote from vapor cycle refrigeration system 12. Heat sink inlet temperature sensor $T_{HSI}$ is positioned at or near the heat sink inlet of condenser 24 to sense a temperature of the cooling liquid and/or gaseous flow through the heat sink inlet.

As further illustrated in FIG. 1, system 10 includes data acquisition system 18, display 20, and computer system 14. Data acquisition system 18 includes one or more electronic components configured to receive various discrete, analog, and/or digital parameters from sensors and/or systems of an aircraft that includes system 10 and distribute the received parameters to consuming systems. Display 20 can be a display device positioned in, e.g., a cockpit of the aircraft. In some examples, display 20 can include one or more input devices, such as buttons or touch-sensitive components to receive input from a user (e.g., user confirmation or acknowledgments of displayed data). Computer system 14 can be a remote, ground-based computer system or a computer system of an aircraft that includes system 10. For example, computer system 14 can be part of a ground-based maintenance system that receives aircraft operational data and processes the data for diagnostic or other maintenance activities. In other examples, computer system 14 can be part of an on-board avionics system, such as an aircraft prognostics and health management system.

Controller 22, as illustrated in FIG. 1, is communicatively coupled to data acquisition system 18 via one or more wired or wireless communication channels, or both. For example, controller 22 can be connected to data acquisition system 18 via an aircraft data bus implementing the Aeronautical Radio, Inc. (ARINC) 429 or other communication protocol. Data acquisition system 18 is communicatively coupled to display 20 (e.g., via the ARINC 429 data bus or other communication channels) to transmit data that is displayed at display 20 and/or receive data (e.g., user input data) from display 20. Data acquisition system 18 is communicatively coupled with computer system 14 via one or more wired and/or wireless communication channels. For instance, in examples where computer system 14 is a ground-based computer system, data acquisition system 18 can be communicatively coupled with computer system 14 via one or more wireless communication channels, such as cellular communications, wireless Internet communications (e.g., WiFi), or other wireless communication channels.

Each of computer system 14 and controller 22 include one or more processors and computer-readable memory encoded with instructions that, when executed by the one or more processors, cause computer system 14 and controller 22 to operate in accordance with techniques described herein. Examples of the one or more processors include any one or more of a microprocessor, a controller, a digital signal processor (DSP), an application specific integrated circuit (ASIC), a field-programmable gate array (FPGA), or other equivalent discrete or integrated logic circuitry. Computer-readable memory of computer system 14 and controller 22 can be configured to store information with computer system 14 and controller 22 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of computer system 14 and controller 22 can include volatile and non-volatile memories. Examples of volatile memories can include random access memories (RAM), dynamic random access memories (DRAM), static random access memories (SRAM), and other forms of volatile memories Examples of non-volatile memories can include magnetic hard discs, optical discs, floppy discs, flash memories, or forms of electrically programmable memories (EPROM) or electrically erasable and programmable (EEPROM) memories.

Computer system 14, as illustrated in FIG. 1, includes ROM module 34 and filter RUL module 36. As described herein, computer system 14 utilizes ROM module 34 to generate predicted discharge pressures of compressor 32 corresponding to an unclogged state of filter 16 and a clogged state of filter 16. Computer system 14 utilizes filter RUL module 36 to determine a remaining useful life of filter 16 based on the predicted discharge pressures from ROM module 34 and a measured discharge pressure sensed by compressor discharge pressure sensor $P_{CD}$.

The reduced order models utilized by ROM module 34 can be generated based on a high-fidelity physics-based model of vapor cycle refrigeration system 12 or operational data captured during operation of vapor cycle refrigeration system 12 (e.g., test data), as is further described below. ROM module 34 can utilize a first reduced order model that is adapted to generate a first predicted discharge pressure of compressor 32 corresponding to an unclogged state of filter 16 based on a set of measured input parameters of vapor cycle refrigeration system 12. ROM module 34 can utilize a second reduced order model that is adapted to generate a second predicted discharge pressure of compressor 32 corresponding to a clogged state of filter 16 based on the set of measured input parameters of vapor cycle refrigeration system 12. Each of the first and second reduced order models can be implemented using the following equation:

$$\mathrm{P_{pred}} = b_0 + \sum_i b_i x_i^{c_i} + \sum_j b_j (X)_j^{c_j} \qquad\qquad \text{Equation (1)}$$

where:

$P_{pred}$ is a predicted discharge pressure of the compressor (i.e., the first predicted discharge pressure corresponding to the unclogged state of filter 16 or the second predicted discharge pressure corresponding to the clogged state of filter 16);

$b_0$ is a constant;

$b_i$ and $b_j$ are multiplicative regression coefficients;

$c_i$ and $c_j$ are exponential regression coefficients;

$x_i$ are first order parameters, each corresponding to one of the set of measured input operational parameters; and

$X_j$ are interaction terms, each corresponding to a multiplicative product of two or more of the measured input operational parameters.

ROM module 34 can receive a set of measured input parameters from one or more of compressor suction temperature sensor $T_{CS}$, compressor discharge temperature sensor $T_{CD}$, heat sink inlet temperature sensor $T_{HSI}$, compressor suction pressure sensor $P_{CS}$, compressor discharge pressure sensor $P_{CD}$, compressor speed sensor N, and compressor current sensor I. ROM module 34 can determine the first predicted discharge pressure of compressor 32 corresponding to the unclogged state of filter 16 using Equation (1) having constant $b_0$, multiplicative regression coefficients $b_i$ and $b_j$, and exponential regression coefficients $c_i$ and $c_j$ that are configured to produce a predicted pressure $P_{pred}$ that estimates a discharge pressure of compressor 32 during operation of vapor cycle refrigeration system 12 having an unclogged state of filter 16. ROM module 34 can determine the second predicted discharge pressure of compressor 32 corresponding to the clogged state of filter 16 using Equation (1) having constant $b_0$, multiplicative regression coefficients $b_i$ and $b_j$, and exponential regression coefficients $c_i$ and $c_j$ that are configured to produce a predicted pressure $P_{pred}$ that estimates a discharge pressure of compressor 32 during operation of vapor cycle refrigeration system 12 having a clogged state of filter 16.

Filter RUL module 36 utilizes the first predicted discharge pressure corresponding to the unclogged state of filter 16, the second predicted discharge pressure corresponding to the clogged state of filter 16, and a measured pressure from compressor discharge pressure sensor $P_{CD}$ to determine a remaining useful life of filter 16. For example, RUL module 36 can determine the remaining useful life of filter 16 using the following equation:

$$\text{Filter}_{\text{life}} = \min(1, 1 - \frac{P_{dis} - P_{disClean}}{P_{disClogged} - P_{disClean}}) \times 100\% \quad \text{Equation (2)}$$

where:

Filter$_{\text{life}}$ is the remaining useful life of the filter;
$P_{dis}$ is the measured discharge pressure received from compressor discharge pressure sensor $P_{CD}$;
$P_{disClean}$ is the first predicted discharge pressure corresponding to the unclogged state of filter 16;
$P_{disClogged}$ is the second predicted discharge pressure corresponding to the clogged state of filter 16; and
the min operator selects the minimum value of the two operands.

Computer system 14 can output an indication of the remaining useful life of filter 16, such as to a display device of computer system 14 (not illustrated), data acquisition system 18, or other consuming system. While Equation (2) above is adapted to produce a remaining useful life of filter 16 that is expressed as a percentage of filtering capacity of filter 16 remaining prior to reaching a clogged filter state that can result in protective shutdown of compressor 32, in some examples, the remaining useful life of filter 16 output by computer system 14 can include other indications of the remaining useful life. For instance, RUL module 36 can determine an estimated remaining runtime of vapor cycle refrigeration system 12 prior to reaching the clogged state of filter 16 based on a runtime of vapor cycle refrigeration system 12 since installation (or cleaning) of filter 16 and the determined percentage of filtering capacity of filter 16 remaining prior to reaching the clogged filter state.

In operation, computer system 14 transmits a data upload request to data acquisition system 18 to request an upload of measured operational parameters of vapor cycle refrigeration system 12 during operation of vapor cycle refrigeration system 12. The upload request can be periodic, such as on a per-flight basis, a per-runtime basis, or other periods. Data acquisition system 18, in response to receiving the data upload request, retrieves measured operational parameters of vapor cycle refrigeration system 12 from controller 22 and transmits the received parameters to computer system 14. The measured operational parameters can include, e.g., measured parameters from compressor suction temperature sensor $T_{CS}$, compressor discharge temperature sensor $T_{CD}$, heat sink inlet temperature sensor $T_{HSI}$, compressor suction pressure sensor $P_{CS}$, compressor discharge pressure sensor $P_{CD}$, compressor speed sensor N, and compressor current sensor I.

ROM module 34 determines a first predicted discharge pressure of compressor 32 based on the measured operational parameters using a first reduced order model that corresponds to an unclogged state of filter 16. ROM module 23 determines a second predicted discharge pressure of compressor 32 based on the measured operational parameters using a second reduced order model that corresponds to a clogged state of filter 16. Filter RUL module 36 determines a remaining useful life of filter 16 based on the first predicted discharge pressure, the second predicted discharge pressure, and a measured discharge pressure sensed by compressor discharge pressure sensor $P_{CD}$.

Computer system 14 outputs an indication of the remaining useful life of filter 16, such as to a display of computer system 14 (e.g., for use by maintenance personnel), data acquisition system 18 (e.g., for further transmission to an aircraft prognostics and health management system), or to one or more other consuming systems. As such, system 10 implementing techniques of this disclosure determines a remaining useful life of filter 16 that can be monitored over time to enable maintenance personnel and/or prognostic systems to predict (and plan for) maintenance of filter 16 prior to a degree of clogging of filter 16 that could result in inoperability of vapor cycle refrigeration system 12.

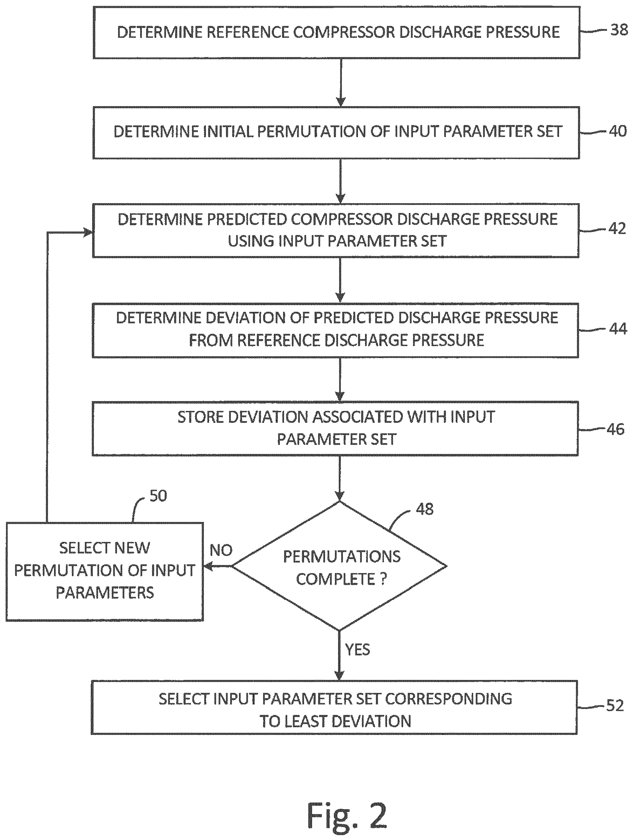

FIG. 2 is a flow diagram illustrating example operations to generate a reduced order model that can be utilized to determine a remaining useful life of a filter of a vapor cycle refrigeration system. For purposes of clarity and ease of discussion, the example operations are described below within the context of system 10 of FIG. 1. While described with respect to the generation of a single reduced order model, the example operations of FIG. 2 can be used by ROM module 34 to generate multiple reduced order models corresponding to multiple operational states of filter 16, such as an unclogged state of filter 16, a clogged state of filter 16, or other defined states of filter 16.

A reference discharge pressure for compressor 32 of vapor cycle refrigeration system 12 which the reduced order models will try to predict is generated and collected (Step 38) via methods such as high fidelity modeling results and/or laboratory or field test data collection. The reference discharge pressure of compressor 32 is determined for a selected state of filter 16, such as one of an unclogged state and a clogged state of filter 16. The unclogged state of filter 16 corresponds to an operational state and corresponding impedance to flow of refrigerant in which filter 16 contains substantially only filter media without foreign debris. The clogged state of filter 16 corresponds to an operational state in which filter 16 exhibits an impedance to refrigerant flow that results in an operational discharge pressure of compressor 32 that is near or exceeds a predefined maximum protective threshold pressure. In some examples, computer system 14 can determine the reference discharge pressure of compressor 32 over an operational envelope of vapor cycle refrigeration system 12 using a high-fidelity physics-based model that simulates operational parameters of each component of vapor cycle refrigeration system 12. In another example, computer system 14 can determine a reference discharge pressure of compressor 32 using stored operational parameters of vapor cycle refrigeration 12 that were stored during previous operation of vapor cycle refrigeration cycle 12 with the corresponding state of filter 16 during, for example, test data collection in the field or laboratory (e.g., an unclogged state, a clogged state, or other states of filter 16).

An initial permutation of input parameters is determined (Step 40). For example, a first permutation of input parameters $x_i$ and interaction terms $X_j$ from Equation (1) can be determined. A predicted compressor discharge pressure of compressor 32 is generated using Equation (1) and the selected set of input parameters (Step 42). For instance, ROM module 34 can generate predicted compressor discharge pressure $P_{pred}$ using Equation (1) with the selected set (e.g., the first permutation) of input parameters $x_i$ and interaction terms $X_j$. The deviation of the determined predicted discharge pressure of compressor 32 from the reference discharge pressure is determined (Step 44). For example, ROM module 34 can determine the difference between the predicted discharge pressure $P_{pred}$ and the reference discharge pressure collected via high fidelity modeling results or laboratory test data collection corresponding to the selected state of filter 16 (e.g., one of the unclogged or clogged state of filter 16). The deviation of the predicted discharge pressure from the collected reference discharge pressure is associated with the selected permutation of input parameters and stored in computer-readable memory of computer system 14 (Step 46).

Computer system 14 determines whether each permutation of input parameters has been selected (Step 48). In response to determining that at least one permutation of input parameters has not been selected ("NO" branch of 48), computer system 14 selects a new permutation of the set of input parameters (Step 50) and determines a predicted discharge pressure $P_{pred}$ of compressor 32 using the new permutation of input parameters (Step 42). In response to determining that each permutation of input parameters has been selected ("YES" branch of 48), computer system 14 selects the input parameter set corresponding to the least deviation from the reference discharge pressure (Step 52). For example, computer system 14 can select the least deviation from the set of stored deviations of predicted discharge pressures from the reference discharge pressure. Computer system 14 can select the associated permutation of input parameters as the set of input parameters that are used for the reduced order model to determine the predicted discharge pressure corresponding to the selected state of filter 16. As such, computer system 14 can determine the set of input parameters from among the set of possible input parameters that produce a least deviation from the reference discharge pressure.

In another embodiment, an initial statistical test is first conducted to determine which input parameters $x_i$ and interaction terms $X_j$ from Equation (1) show the greatest sensitivity and correlation to the reference discharge pressure. Input parameters and interaction terms that do not pass the statistical test are omitted from Equation (1) and not used further. An optimizer is then use to determine the regression coefficients to give the best fit to the reference discharge pressure in Equation (1).

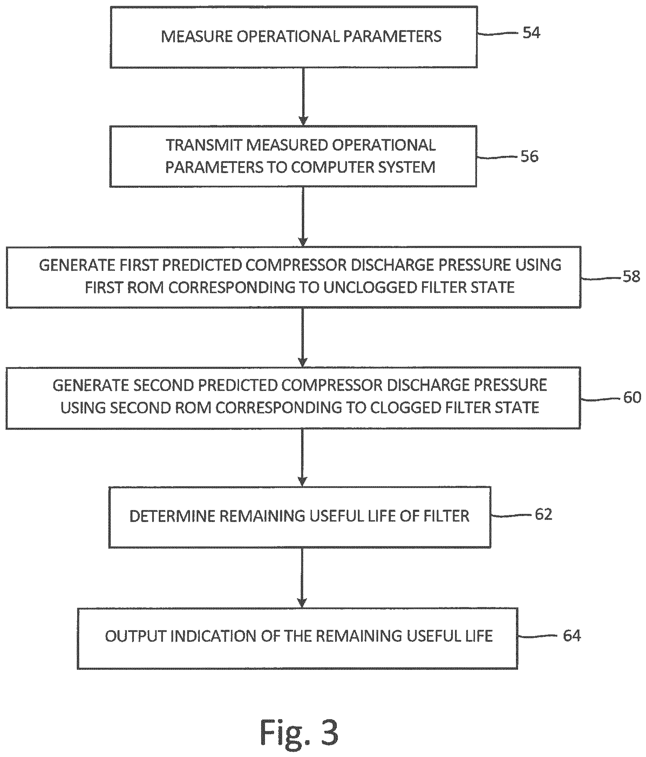

FIG. 3 is a flow diagram illustrating example operations to determine a remaining useful life of a filter of a vapor cycle refrigeration system using reduced order models. For purposes of clarity and ease of discussion, the example operations are described below within the context of system 10 of FIG. 1. Operational parameters of vapor cycle refrigeration system 12 are measured via a plurality of sensors while vapor cycle refrigeration system 12 is operating (Step 54). For example, compressor suction temperature sensor $T_{CS}$, compressor discharge temperature sensor $T_{CD}$, heat sink inlet temperature sensor $T_{HSI}$, compressor suction pressure sensor $P_{CS}$, compressor discharge pressure sensor $P_{CD}$, compressor speed sensor N, and compressor motor current sensor I can measure operational parameters of vapor cycle refrigeration system 12 during operation of vapor cycle refrigeration system 12. The measured operational parameters are transmitted to computer system 14 (Step 56). For instance, data acquisition system 18 can transmit a data upload request to controller 22 to request the transmission of the operational parameters from controller 22 to data acquisition system 18. Controller 22 can transmit the operational parameters sensed by compressor suction temperature sensor $T_{CS}$, compressor discharge temperature sensor $T_{CD}$, heat sink inlet temperature sensor $T_{HSI}$, compressor suction pressure sensor $P_{CS}$, compressor discharge pressure sensor $P_{CD}$, compressor speed sensor N, and compressor motor current sensor I to data acquisition system 18 in response to receiving the data upload request. Data acquisition system 18 can transmit the measured operational parameters to computer system 14 via, e.g., one or more wired and/or wireless communication channels.

ROM module 34 generates, using a first reduced order model that corresponds to an unclogged state of filter 16, a first predicted discharge pressure of compressor 32 based on the measured operational parameters (Step 58). ROM module 34 generates, using a second reduced order model that corresponds to a clogged state of filter 16, a second predicted discharge pressure of compressor 32 based on the measured operational parameters (Step 60). Filter RUL module 36 determines a remaining useful life of filter 16 based on the first predicted discharge pressure, the second predicted discharge pressure, and a measured discharge pressure sensed by compressor discharge pressure sensor P$_{CD}$ (Step 62). For example, filter RUL module 36 can determine the remaining useful life of filter 16 using Equation (2). Computer system 14 outputs an indication of the remaining useful life of filter 16 (Step 64).

Accordingly, system 10 implementing techniques of this disclosure determines a remaining useful life of filter 16 that can be monitored over time to enable maintenance personnel and/or prognostic systems to plan for maintenance of filter 16 prior to a level of clogging that could result in unplanned inoperability of vapor cycle refrigeration system 12.

**Discussion of Possible Embodiments**

The following are non-exclusive descriptions of possible embodiments of the present invention.

A method includes operating a vapor cycle refrigeration system of an aircraft, measuring, via a plurality of sensors, operational parameters of the vapor cycle refrigeration system while the vapor cycle refrigeration system is operating, and transmitting the measured operational parameters to a computer system. The method further includes generating, by the computer system using a first reduced order model that corresponds to an unclogged state of a filter of the aircraft vapor cycle refrigeration system, a first predicted discharge pressure of a compressor of the aircraft vapor cycle refrigeration system based on the measured operational parameters. The method further includes generating, by the computer system using a second reduced order model that corresponds to a clogged state of the filter, a second predicted discharge pressure of the compressor based on the measured operational parameters. The method further includes determining, by the computer system, a remaining useful life of the filter based on the first predicted discharge pressure, the second predicted discharge pressure, and a measured discharge pressure of the compressor, and outputting, by the computer system, an indication of the remaining useful life of the filter.

The method of the preceding paragraph can optionally include, additionally and/or alternatively, any one or more of the following features, configurations, operations and/or additional components:

A further embodiment of the foregoing method, wherein determining the remaining useful life of the filter can include determining the remaining useful life of the filter according to the following equation:

$$\text{Filter}_{\text{life}} = \min(1,1 - \frac{P_{dis} - P_{disClean}}{P_{disClogged} - P_{disClean}}) \text{ x } 100\%;$$ where: Filter$_{\text{life}}$ is the remaining useful life of the filter; P$_{dis}$

is the measured discharge pressure of the compressor; P$_{disClean}$ is the first predicted discharge pressure of the compressor; and P$_{disClogged}$ is the second predicted discharge pressure of the compressor.

A further embodiment of any of the foregoing methods, wherein each of the first reduced order model and the second reduced order model can be of the following form: $P_{\text{pred}} = b_0 + \sum_i b_i x_i^{c_i} + \sum_j b_j (X)_j^{c_j};$ where: P$_{\text{pred}}$ is a predicted discharge pressure of the compressor; $b_0$ is a constant; $b_i$ and $b_j$ are multiplicative regression coefficients; $c_i$ and $c_j$ are exponential regression coefficients; $x_i$ are first order parameters, each corresponding to one of the measured operational parameters; and $X_j$ are interaction terms, each corresponding to a multiplicative product of two or more of the measured operational parameters.

A further embodiment of any of the foregoing methods, further comprising selecting the first order parameters $x_i$ from a set of candidate first order parameters and selecting the interaction terms $X_j$ from a set of candidate interaction terms based on determining that the first order parameters $x_i$ and the interaction terms $X_j$ result in the predicted discharge pressure P$_{\text{pred}}$ that is within a threshold deviation from a reference discharge pressure of the compressor.

A further embodiment of any of the foregoing methods, further comprising: generating the first reduced order model using a high-fidelity physics-based model of the vapor cycle refrigeration system having a simulated unclogged state of the filter; and generating the second reduced order model using the high-fidelity physics-based model having a simulated clogged state of the filter.

A further embodiment of any of the foregoing methods, further comprising: generating the first reduced order model using first stored operational parameters of the vapor cycle refrigeration system that were stored during previous operation of the vapor cycle refrigeration system with the unclogged state of the filter; and generating the second reduced order model using second stored operational parameters of the vapor cycle refrigeration system that were stored during previous operation of the vapor cycle refrigeration system with the clogged state of the filter

A further embodiment of any of the foregoing methods, wherein computer system can be a remote, ground-based computer system.

A further embodiment of any of the foregoing methods, further comprising: receiving, by a controller device of the vapor cycle refrigeration system, a data upload request from a data acquisition system of an aircraft that includes the vapor cycle refrigeration system. Transmitting the plurality of measured operational parameters to the computer system can include: transmitting the plurality of measured operational parameters from the controller device of the vapor cycle refrigeration system to the data acquisition system in response to receiving the data upload request; and transmitting the plurality of measured operational parameters from the data acquisition system to the computer system.

A further embodiment of any of the foregoing methods, wherein the indication of the remaining useful life of the filter can include an indication of an estimated amount of remaining run-time of the vapor cycle refrigeration system before the remaining useful life of the filter reaches an unacceptable level.

A further embodiment of any of the foregoing methods, wherein the operational parameters include one or more of a compressor suction temperature, a compressor discharge temperature, a heat sink inlet temperature, a compressor suction pressure, a compressor discharge pressure, a compressor speed, and a compressor motor current draw.

A system includes a vapor cycle refrigeration system of an aircraft and a computer system. The vapor cycle refrigeration system includes a plurality of sensors, a compressor, and a filter. The plurality of sensors are configured to measure operational parameters of the vapor cycle refrigeration system. The compressor is configured to compress refrigerant of the vapor cycle refrigeration system. The filter is disposed within a flow path of the refrigerant. The computer system includes at least one processor and computer-readable memory. The computer-readable memory is encoded with instructions that, when executed by the at least one processor, cause the computer system to receive the operational parameters of the vapor cycle refrigeration system measured by the plurality of sensors, and generate, using a first reduced order model that corresponds to an unclogged state of the filter, a first predicted discharge pressure of the compressor based on the received operational parameters. The computer-readable memory is further encoded with instructions that, when executed by the at least one processor, cause the computer system to generate, using a second reduced order model that corresponds to a clogged state of the filter, a second predicted discharge pressure of the compressor based on the received operational parameters. The computer-readable memory is further encoded with instructions that, when executed by the at least one processor, cause the computer system to determine a remaining useful life of the filter based on the first predicted discharge pressure, the second predicted discharge pressure, and a measured discharge pressure of the compressor. The computer-readable memory is further encoded with instructions that, when executed by the at least one processor, cause the computer system to output an indication of the remaining useful life of the filter.

The system of the preceding paragraph can optionally include, additionally and/or alternatively, any one or more of the following features, configurations, operations and/or additional components:

A further embodiment of the foregoing system, wherein the computer system can be encoded with instructions that, when executed by the at least one processor, cause the computer system to determine the remaining useful life of the filter according to the following equation: $\mathrm{Filter}_{life} = \min(1, 1 - \frac{P_{dis} - P_{disClean}}{P_{disClogged} - P_{disClean}}) \times 100\%$; where $\mathrm{Filter}_{life}$ is the remaining useful life of the filter; $P_{dis}$ is the measured discharge pressure of the compressor; $P_{disClean}$ is the first predicted discharge pressure of the compressor; and $P_{disClogged}$ is the second predicted discharge pressure of the compressor.

A further embodiment of the foregoing system, wherein each of the first reduced order model and the second reduced order model can be of the following form: $P_{pred} = b_0 + \sum_i b_i x_i^{c_i} + \sum_j b_j (X)_j^{c_j}$; where: $P_{pred}$ is a predicted discharge pressure of the compressor; $b_0$ is a constant; $b_i$ and $b_j$ are multiplicative regression coefficients; $c_i$ and $c_j$ are exponential regression coefficients; $x_i$ are first order parameters, each corresponding to one of the measured operational parameters; and $X_j$ are interaction terms, each corresponding to a multiplicative product of two or more of the measured operational parameters.

A further embodiment of the foregoing system, wherein the computer-readable memory can be further encoded with instructions that, when executed by the at least one processor, cause the computer system to select the first order parameters $x_i$ from a set of candidate first order parameters and select the interaction terms $X_j$ from a set of candidate interaction terms based on determining that the first order parameters $x_i$ and the interaction terms $X_j$ result in the predicted discharge pressure Ppred that is within a threshold deviation from a reference discharge pressure of the compressor.

A further embodiment of the foregoing system, wherein the computer-readable memory can be further encoded with instructions that, when executed by the at least one processor, cause the computer system to: generate the first reduced order model using a high-fidelity physics-based model of the vapor cycle refrigeration system having a simulated unclogged state of the filter; and generate the second reduced order model using the high-fidelity physics-based model having a simulated clogged state of the filter.

A further embodiment of the foregoing system, wherein the computer-readable memory can be further encoded with instructions that, when executed by the at least one processor, cause the computer system to: generate the first reduced order model using first stored operational parameters of the vapor cycle refrigeration system that were stored during previous operation of the vapor cycle refrigeration system with the unclogged state of the filter; and generate the second reduced order model using second stored operational parameters of the vapor cycle refrigeration system that were stored during previous operation of the vapor cycle refrigeration system with the clogged state of the filter.

A further embodiment of the foregoing system, wherein the computer-system can be a remote, ground-based computer system.

A further embodiment of the foregoing system, wherein the vapor cycle refrigeration system can further include a controller device operatively connected to the plurality of sensors and to a data acquisition system of the aircraft. The controller device can be configured to transmit the operational parameters of the vapor cycle refrigeration system measured by the plurality of sensors to the data acquisition system in response to receiving a data upload request from the data acquisition system.

A further embodiment of the foregoing system, wherein the computer system can be further encoded with instructions that, when executed by the at least one processor, cause the computer system to determine an estimated amount of remaining run-time of the vapor cycle refrigeration system before the remaining useful life of the filter reaches an unacceptable level.

A further embodiment of the foregoing system, wherein the plurality of sensors can include one or more of a compressor suction temperature sensor, a compressor discharge temperature sensor, a heat sink inlet temperature sensor, a compressor suction pressure sensor, a compressor discharge pressure sensor, a compressor speed sensor, and a compressor motor current sensor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A method comprising:

   operating a vapor cycle refrigeration system (12) of an aircraft;
   measuring, via a plurality of sensors, operational parameters of the vapor cycle refrigeration system while the vapor cycle refrigeration system is operating;
   transmitting the measured operational parameters to a computer system (14);
   generating, by the computer system (14) using a first reduced order model that corresponds to an unclogged state of a filter of the aircraft vapor cycle refrigeration system, a first predicted discharge pressure of a compressor (32) of the aircraft vapor cycle refrigeration system based on the measured operational parameters;
   generating, by the computer system (14) using a second reduced order model that corresponds to a clogged state of the filter, a second predicted discharge pressure of the compressor based on the measured operational parameters;
   determining, by the computer system (14), a remaining useful life of the filter based on the first predicted discharge pressure, the second predicted discharge pressure, and a measured discharge pressure of the compressor; and
   outputting, by the computer system (14), an indication of the remaining useful life of the filter.

2. The method of claim 1,
   wherein determining the remaining useful life of the filter comprises determining the remaining useful life of the filter according to the following equation:

$$\text{Filter}_{\text{life}} = \min\left(1, 1 - \frac{P_{dis} - P_{disClean}}{P_{disClogged} - P_{disClean}}\right) \times 100\%;$$

   wherein:

   $\text{Filter}_{\text{life}}$ is the remaining useful life of the filter;
   $P_{dis}$ is the measured discharge pressure of the compressor;
   $P_{disClean}$ is the first predicted discharge pressure of the compressor; and
   $P_{disClogged}$ is the second predicted discharge pressure of the compressor.

**3.** The method of claim 1 or 2,
wherein each of the first reduced order model and the second reduced order model are of the following form:

$$P_{\text{pred}} = b_0 + \sum_i b_i x_i^{c_i} + \sum_j b_j (X)_j^{c_j};$$

wherein:

$P_{\text{pred}}$ is a predicted discharge pressure of the compressor;
$b_0$ is a constant;
$b_i$ and $b_j$ are multiplicative regression coefficients;
$c_i$ and $c_j$ are exponential regression coefficients;
$x_i$ are first order parameters, each corresponding to one of the measured operational parameters; and
$X_j$ are interaction terms, each corresponding to a multiplicative product of two or more of the measured operational parameters.

**4.** The method of claim 3, further comprising:
selecting the first order parameters $x_i$ from a set of candidate first order parameters and selecting the interaction terms $X_j$ from a set of candidate interaction terms based on determining that the first order parameters $x_i$ and the interaction terms $X_j$ result in the predicted discharge pressure $P_{\text{pred}}$ that is within a threshold deviation from a reference discharge pressure of the compressor.

**5.** The method of any preceding claim, further comprising:

generating the first reduced order model using a high-fidelity physics-based model of the vapor cycle refrigeration system having a simulated unclogged state of the filter; and
generating the second reduced order model using the high-fidelity physics-based model having a simulated clogged state of the filter.

**6.** The method of any of claims 1 to 4, further comprising:

generating the first reduced order model using first stored operational parameters of the vapor cycle refrigeration system that were stored during previous operation of the vapor cycle refrigeration system with the unclogged state of the filter; and
generating the second reduced order model using second stored operational parameters of the vapor cycle refrigeration system that were stored during previous operation of the vapor cycle refrigeration system with the clogged state of the filter.

**7.** The method of any preceding claim,
wherein the computer system is a remote, ground-based computer system.

**8.** The method of any preceding claim, further comprising:

receiving, by a controller device of the vapor cycle refrigeration system, a data upload request from a data acquisition system of an aircraft that includes the vapor cycle refrigeration system;
wherein transmitting the plurality of measured operational parameters to the computer system comprises:

transmitting the plurality of measured operational parameters from the controller device of the vapor cycle refrigeration system to the data acquisition system in response to receiving the data upload request; and
transmitting the plurality of measured operational parameters from the data acquisition system to the computer system.

**9.** The method of any preceding claim,
wherein the indication of the remaining useful life of the filter includes an indication of an estimated amount of remaining run-time of the vapor cycle refrigeration system before the remaining useful life of the filter reaches an unacceptable level.

**10.** The method of any preceding claim,
wherein the operational parameters include one or more of a compressor suction temperature, a compressor discharge temperature, a heat sink inlet temperature, a compressor suction pressure, a compressor discharge pressure, a compressor speed, and a compressor motor current draw.

**11.** A system comprising:

a vapor cycle refrigeration system (12) of an aircraft, the vapor cycle refrigeration system comprising:

a plurality of sensors configured to measure operational parameters of the vapor cycle refrigeration system;
a compressor (32) configured to compress refrigerant of the vapor cycle refrigeration system; and
a filter (16) disposed within a flow path of the refrigerant; and

a computer system (14) comprising:

at least one processor; and
computer-readable memory (34) encoded with instructions that, when executed by the at least one processor, cause the computer system to execute the method of any of claims 1-10.

**12.** The system of claim 11,
wherein the computer-system is a remote, ground-based computer system.

**13.** The system of claim 11 or 12,
wherein the vapor cycle refrigeration system further comprises:
a controller device (22) operatively connected to the plurality of sensors and to a data acquisition system (18) of the aircraft; and
wherein the controller device is configured to transmit the operational parameters of the vapor cycle refrigeration system measured by the plurality of sensors to the data acquisition system in response to receiving a data upload request from the data acquisition system.

**14.** The system of claim 11, 12 or 13,
wherein the plurality of sensors include one or more of a compressor suction temperature sensor, a compressor discharge temperature sensor, a heat sink inlet temperature sensor, a compressor suction pressure sensor, a compressor discharge pressure sensor, a compressor speed sensor, and a compressor motor current sensor.

**Patentansprüche**

**1.** Verfahren, das Folgendes umfasst:

Betreiben eines Dampfzykluskühlsystems (12) eines Flugzeugs;
Messen von Betriebsparametern des Dampfzykluskühlsystems über eine Vielzahl von Sensoren, während das Dampfzykluskühlsystem arbeitet;
Übertragen der gemessenen Betriebsparameter an ein Computersystem (14);
Erzeugen durch das Computersystem (14) unter Verwendung eines ersten Modells einer reduzierten Ordnung, das einem unverstopften Zustand des Filters des Dampfzykluskühlsystems des Flugzeugs entspricht, eines ersten vorhergesagten Entladungsdrucks eines Verdichters (32) des Dampfzykluskühlsystems des Flugzeugs auf der Basis der gemessenen Betriebsparameter;
Erzeugen durch das Computersystem (14) unter Verwendung eines zweiten Modells einer reduzierten Ordnung, das einem verstopften Zustand des Filters entspricht, eines zweiten vorhergesagten Entladungsdrucks des Verdichters auf der Basis der gemessenen Betriebsparameter;
Bestimmen durch das Computersystem (14) einer verbleibenden Lebensdauer des Filters auf der Basis des ersten vorhergesagten Entladungsdrucks, des zweiten vorhergesagten Entladungsdrucks und eines gemessenen Entladungsdrucks des Verdichters; und
Ausgeben durch das Computersystem (14) einer Anzeige der verbleibenden Lebensdauer des Filters.

**2.** Verfahren nach Anspruch 1,
wobei das Bestimmen der verbleibenden Lebensdauer des Filters ein Bestimmen der verbleibenden Lebensdauer des Filters gemäß der folgenden Gleichung umfasst:

$$\mathrm{Filter_{Lebensdauer}} = \min\left(1, 1 - \frac{P_{Ent} - P_{EntSauber}}{P_{EntVerstopft} - P_{EntSauber}}\right) \times 100\%;$$

wobei:

$\mathrm{Filter_{Lebensdauer}}$ die verbleibende Lebensdauer des Filters ist;
$P_{Ent}$ der gemessene Entladungsdruck des Verdichters ist;
$P_{EntSauber}$ der erste vorhergesagte Entladungsdruck des Verdichters ist; und
$P_{EntVerstopft}$ der zweite vorhergesagte Entladungsdruck des Verdichters ist.

3. Verfahren nach Anspruch 1 oder 2,
wobei jedes von dem ersten Modell einer reduzierten Ordnung und dem zweiten Modell einer reduzierten Ordnung der folgenden Formel entspricht:

$$P_{vorh} = b_0 + \sum_i b_i \, x_i^{c_i} + \sum_j b_j \, (X)_j^{c_j};$$

wobei:

$P_{vorh}$ der vorhergesagte Entladungsdruck des Verdichters ist;
$b_0$ eine Konstante ist;
$b_i$ und $b_j$ multiplikative Regressionskoeffizienten sind;
$c_i$ und $c_j$ exponentielle Regressionskoeffizienten sind;
$x_i$ Parameter erster Ordnung sind, von denen jeder einem der gemessenen Betriebsparameter entspricht;
$X_j$ Wechselwirkungsbezeichnungen sind, von denen jede einem multiplikativen Produkt von zwei oder mehr gemessenen Betriebsparametern entspricht.

4. Verfahren nach Anspruch 3, ferner umfassend:
Auswählen der Parameter $x_i$ der ersten Ordnung aus einem Satz von Kandidatenparametern der ersten Ordnung und Auswählen der Wechselwirkungsbezeichnungen $X_j$ aus einem Satz von Kandidatenwechselwirkungsbezeichnungen auf der Basis eines Bestimmens, dass die Parameter $x_i$ der ersten Ordnung und die Wechselwirkungsbezeichnungen $X_j$ in dem vorhergesagten Entladungsdruck $P_{vorh}$ resultieren, der sich innerhalb einer Schwellenwertabweichung von einem Referenzentladungsdruck des Verdichters befindet.

5. Verfahren nach einem der vorhergehenden Ansprüche, ferner umfassend:

Erzeugen eines ersten Modells einer reduzierten Ordnung unter Verwendung eines originalgetreuen physikalischbasierten Modells des Dampfzykluskühlsystems, das einen simulierten unverstopften Zustand des Filters einschließt; und
Erzeugen des zweiten Modells einer reduzierten Ordnung unter Verwendung des originalgetreuen physikalischbasierten Modells des Dampfzykluskühlsystems, das einen simulierten verstopften Zustand des Filters aufweist.

6. Verfahren nach einem der Ansprüche 1 bis 4, ferner umfassend:

Erzeugen des ersten Modells einer reduzierten Ordnung unter Verwendung von ersten gespeicherten Betriebsparametern des Dampfzykluskühlsystems, die während eines vorherigen Betriebs des Dampfzykluskühlsystems mit dem unverstopften Zustand des Filters gespeichert worden sind; und
Erzeugen des zweiten Modells einer reduzierten Ordnung unter Verwendung von zweiten gespeicherten Betriebsparametern des Dampfzykluskühlsystems, die während eines vorherigen Betriebs des Dampfzykluskühlsystems mit dem verstopften Zustand des Filters gespeichert worden sind.

7. Verfahren nach einem der vorhergehenden Ansprüche,
wobei das Computersystem ein entferntes, bodengestütztes Computersystem ist.

8. Verfahren nach einem der vorhergehenden Ansprüche, ferner umfassend:

Empfangen durch eine Datensteuerungsvorrichtung des Dampfzykluskühlsystems einer Datenhochladeanforderung von einem Datensammelsystem eines Flugzeugs, das das Dampfzykluskühlsystem umfasst; wobei das Übertragen der Vielzahl von gemessenen Betriebsparametern an das Computersystem Folgendes umfasst:

Übertragen der Vielzahl von gemessenen Betriebsparametern von der Steuerungsvorrichtung des Dampfzykluskühlsystems an das Datensammelsystem als Reaktion auf ein Empfangen der Datenhochladeanforderung; und
Übertragen der Vielzahl von gemessenen Betriebsparametern von dem Datensammelsystem an das Computersystem.

9. Verfahren nach einem der vorhergehenden Ansprüche, wobei die Anzeige der verbleibenden Lebensdauer des Filters eine Anzeige einer abgeschätzten Menge an verbleibender Laufzeit des Dampfzykluskühlsystems, bevor die verbleibende Lebensdauer des Filters ein inakzeptables Level erreicht, einschließt.

10. Verfahren nach einem der vorhergehenden Ansprüche, wobei die Betriebsparameter eines oder mehrere einschließen von einer Verdichteransaugtemperatur, einer Verdichterentladungstemperatur, einer Wärmesenkeneinlasstemperatur, einem Verdichteransaugdruck, einem Verdichterentladungsdruck, einer Verdichtergeschwindigkeit und einer Verdichtermotorstromaufnahme.

11. System, das Folgendes umfasst:

ein Dampfzykluskühlsystem (12) eines Flugzeugs, wobei das Dampfzykluskühlsystem Folgendes umfasst:

eine Vielzahl von Sensoren, die dazu konfiguriert sind, Betriebsparameter des Dampfzykluskühlsystems zu messen;
einen Verdichter (32), der dazu konfiguriert ist, ein Kühlmittel des Dampfzykluskühlsystems zu verdichten; und
einen Filter (16), der innerhalb eines Strömungswegs des Kühlmittels angeordnet ist; und

ein Computersystem (14), das Folgendes umfasst:

mindestens einen Prozessor; und
einen computerlesbaren Speicher (34), der mit Anweisungen kodiert ist, die, wenn sie durch den mindestens einen Prozessor ausgeführt werden, das Computersystem dazu veranlassen, das Verfahren nach einem der Ansprüche 1-10 auszuführen.

12. System nach Anspruch 11, wobei das Computersystem ein entferntes, bodengestütztes Computersystem ist.

13. System nach Anspruch 11 oder 12, wobei das Dampfzykluskühlsystem ferner Folgendes umfasst:
eine Steuerungsvorrichtung (22), die mit der Vielzahl von Sensoren und einem Datensammelsystem (18) des Flugzeugs wirkverbunden ist; und
wobei die Steuerungsvorrichtung dazu konfiguriert ist, die Betriebsparameter des Dampfzykluskühlsystems, die durch die Vielzahl von Sensoren gemessen werden, als Reaktion auf ein Empfangen einer Datenhochladeanforderung von dem Datensammelsystem an das Datensammelsystem zu übertragen.

14. System nach Anspruch 11, 12 oder 13, wobei die Vielzahl von Sensoren eines oder mehrere einschließt von einem Verdichteransaugtemperatursensor, einen Verdichterentladungstemperatursensor, einem Wärmesenkeneinlasstemperatursensor, einem Verdichteransaugdrucksensor, einem Verdichterentladungsdrucksensor, einem Verdichtergeschwindigkeitssensor und einem Verdichtermotorstromaufnahmesensor.

**Revendications**

1. Procédé comprenant :

le fonctionnement d'un système de réfrigération à cycle de vapeur (12) d'un aéronef ;
la mesure, par l'intermédiaire d'une pluralité de capteurs, de paramètres de fonctionnement du système de réfrigération à cycle de vapeur pendant que le système de réfrigération à cycle de vapeur fonctionne ;
la transmission des paramètres de fonctionnement mesurés à un système informatique (14) ;
la génération, par le système informatique (14) à l'aide d'un premier modèle d'ordre réduit qui correspond à un état débouché d'un filtre du système de réfrigération à cycle de vapeur d'aéronef, d'une première pression de décharge prédite d'un compresseur (32) du système de réfrigération à cycle de vapeur d'aéronef sur la base des paramètres de fonctionnement mesurés ;
la génération, par le système informatique (14) à l'aide d'un second modèle d'ordre réduit qui correspond à un état bouché du filtre, d'une seconde pression de décharge prédite du compresseur sur la base des paramètres de fonctionnement mesurés ;
la détermination, par le système informatique (14), de la durée de vie utile restante du filtre sur la base de la première pression de décharge prédite, de la seconde pression de décharge prédite et d'une pression de décharge mesurée du compresseur ; et
l'émission, par le système informatique (14), d'une indication de la durée de vie utile restante du filtre.

2. Procédé selon la revendication 1,
dans lequel la détermination de la durée de vie utile restante du filtre comprend la détermination de la durée de vie utile restante du filtre selon l'équation suivante :

$$Filter_{life} = \min\left(1, 1 - \frac{P_{dis} - P_{disClean}}{P_{disClogged} - P_{disClean}}\right) \times 100\,\% \ ;$$

dans laquelle :

$Filter_{life}$ représente la durée de vie utile restante du filtre ;
$P_{dis}$ représente la pression de décharge mesurée du compresseur ;
$P_{disClean}$ représente la pression de décharge prédite du compresseur ; et
$P_{disClogged}$ représente la seconde pression de décharge prédite du compresseur.

3. Procédé selon la revendication 1 ou 2,
dans lequel chacun du premier modèle d'ordre réduit et du second modèle d'ordre réduit a la forme suivante :

$$P_{pred} = b_0 + \sum_i b_i x_i^{c_i} + \sum_j b_j (X)_j^{c_j} ;$$

dans laquelle :

$P_{pred}$ représente une pression de décharge prédite du compresseur ;
$b_0$ est une constante ;
$b_i$ et $b_j$ représentent des coefficients de régression multiplicatifs ;
$c_i$ et $c_j$ représentent des coefficients de régression exponentiels ;
$x_i$ représente des paramètres de premier ordre, chacun correspondant à l'un des paramètres de fonctionnement mesurés ; et
$X_j$ représente des termes d'interaction, chacun correspondant à un produit multiplicatif de deux ou plus des paramètres de fonctionnement mesurés.

4. Procédé selon la revendication 3, comprenant en outre : la sélection des paramètres de premier ordre $x_i$ parmi un ensemble de paramètres de premier ordre candidats et la sélection des termes d'interaction $X_j$ parmi un ensemble de termes d'interaction candidats sur la base de la détermination que les paramètres de premier ordre $x_i$ et les termes d'interaction $X_j$ ont pour résultat la pression de décharge prédite $P_{pred}$ qui est dans les limites d'un écart seuil par rapport à une pression de décharge de référence du compresseur.

**5.** Procédé selon une quelconque revendication précédente, comprenant en outre :

la génération du premier modèle d'ordre réduit à l'aide d'un modèle haute fidélité basé sur la physique du système de réfrigération à cycle de vapeur ayant un état débouché simulé du filtre ; et
la génération du second modèle d'ordre réduit à l'aide du modèle haute fidélité basé sur la physique ayant un état bouché simulé du filtre.

**6.** Procédé selon l'une quelconque des revendications 1 à 4, comprenant en outre :

la génération du premier modèle d'ordre réduit à l'aide des premiers paramètres de fonctionnement stockés du système de réfrigération à cycle de vapeur qui ont été stockés au cours du fonctionnement précédent du système de réfrigération à cycle de vapeur avec l'état débouché du filtre ; et
la génération du second modèle d'ordre réduit à l'aide des seconds paramètres de fonctionnement stockés du système de réfrigération à cycle de vapeur qui ont été stockés au cours du fonctionnement précédent du système de réfrigération à cycle de vapeur avec l'état bouché du filtre.

**7.** Procédé selon une quelconque revendication précédente, dans lequel le système informatique est un système informatique distant basé au sol.

**8.** Procédé selon une quelconque revendication précédente, comprenant en outre :

la réception, par un dispositif de commande du système de réfrigération à cycle de vapeur, d'une demande de téléchargement de données en provenance d'un système d'acquisition de données d'un aéronef qui inclut le système de réfrigération à cycle de vapeur ;
dans lequel la transmission de la pluralité de paramètres de fonctionnement mesurés au système informatique comprend :

la transmission de la pluralité de paramètres de fonctionnement mesurés du dispositif de commande du système de réfrigération à cycle de vapeur au système d'acquisition de données en réponse à la réception de la demande de téléchargement de données ; et
la transmission de la pluralité de paramètres de fonctionnement mesurés du système d'acquisition de données au système informatique.

**9.** Procédé selon une quelconque revendication précédente,
dans lequel l'indication de la durée de vie utile restante du filtre inclut une indication d'une quantité estimée de la durée de fonctionnement restante du système de réfrigération à cycle de vapeur avant que la durée de vie utile restante du filtre n'atteigne un niveau inacceptable.

**10.** Procédé selon une quelconque revendication précédente,
dans lequel les paramètres de fonctionnement incluent l'une ou plusieurs d'une température d'aspiration de compresseur, d'une température de décharge de compresseur, d'une température d'entrée de dissipateur thermique, d'une pression d'aspiration de compresseur, d'une pression de décharge de compresseur, d'une vitesse de compresseur et d'une consommation de courant de moteur de compresseur.

**11.** Système comprenant :

un système de réfrigération à cycle de vapeur (12) d'un aéronef, le système de réfrigération à cycle de vapeur comprenant :

une pluralité de capteurs configurés pour mesurer des paramètres de fonctionnement du système de réfrigération à cycle de vapeur ;
un compresseur (32) configuré pour comprimer le réfrigérant du système de réfrigération à cycle de vapeur ; et
un filtre (16) disposé à l'intérieur d'un trajet d'écoulement du réfrigérant ; et

un système informatique (14) comprenant :

au moins un processeur ; et

une mémoire lisible par ordinateur (34) codée avec des instructions qui, lorsqu'elles sont exécutées par l'au moins un processeur, amènent le système informatique à exécuter le procédé selon l'une quelconque des revendications 1 à 10.

**12.** Système selon la revendication 11,
dans lequel le système informatique est un système informatique distant basé au sol.

**13.** Système selon la revendication 11 ou 12,
dans lequel le système de réfrigération à cycle de vapeur comprend en outre :

un dispositif de commande (22) connecté de manière opérationnelle à la pluralité de capteurs et à un système d'acquisition de données (18) de l'aéronef ; et
dans lequel le dispositif de commande est configuré pour transmettre les paramètres de fonctionnement du système de réfrigération à cycle de vapeur mesurés par la pluralité de capteurs au système d'acquisition de données en réponse à la réception d'une demande de téléchargement de données en provenance du système d'acquisition de données.

**14.** Système selon la revendication 11, 12 ou 13,
dans lequel la pluralité de capteurs incluent l'un ou plusieurs d'un capteur de température d'aspiration de compresseur, d'un capteur de température de décharge de compresseur, d'un capteur de température d'entrée de dissipateur thermique, d'un capteur de pression d'aspiration de compresseur, d'un capteur de pression de décharge de compresseur, d'un capteur de vitesse de compresseur et d'un capteur de courant de moteur de compresseur.

Fig. 1

Fig. 2

```
┌─────────────────────────────────────────────┐
│         MEASURE OPERATIONAL PARAMETERS        │──── 54
└─────────────────────────────────────────────┘
                        │
                        ▼
┌─────────────────────────────────────────────┐
│         TRANSMIT MEASURED OPERATIONAL         │
│       PARAMETERS TO COMPUTER SYSTEM           │──── 56
└─────────────────────────────────────────────┘
                        │
                        ▼
┌─────────────────────────────────────────────┐
│ GENERATE FIRST PREDICTED COMPRESSOR DISCHARGE │
│  PRESSURE USING FIRST ROM CORRESPONDING TO    │──── 58
│          UNCLOGGED FILTER STATE               │
└─────────────────────────────────────────────┘
                        │
                        ▼
┌─────────────────────────────────────────────┐
│ GENERATE SECOND PREDICTED COMPRESSOR DISCHARGE│
│ PRESSURE USING SECOND ROM CORRESPONDING TO    │──── 60
│          CLOGGED FILTER STATE                 │
└─────────────────────────────────────────────┘
                        │
                        ▼
┌─────────────────────────────────────────────┐
│  DETERMINE REMAINING USEFUL LIFE OF FILTER    │──── 62
└─────────────────────────────────────────────┘
                        │
                        ▼
┌─────────────────────────────────────────────┐
│  OUTPUT INDICATION OF THE REMAINING USEFUL LIFE│──── 64
└─────────────────────────────────────────────┘
```

Fig. 3

**EP 3 275 787 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160101665 A1